# EUROPEAN PATENT APPLICATION

(11) **EP 0 579 516 A1**
(43) Date of publication of application: **19.01.1994**
(21) Application number: 93305660.8
(22) Date of filing: 19.07.1993
(51) Int. Cl.: F16L 3/137, H02G 3/26

(54) **Fastener for electric cable**

(30) Priority: 17.07.1992 JP 50285/92 U
(71) Applicant: EMHART INC., Newark, Delaware 19711 (US)
(72) Inventor: Shibuya, Tomio, Utsunomiya City, Tochigi-Ken (JP)
(74) Representative: Randall, John Walter

(57) **Abstract**

A fastener for electric cable (11) comprises a base (12), a panel attachment portion (13) provided in the base, a band portion (14) to hold an electric cable or the like wound thereby, and a buckle (15) to keep the band portion (14) in bundle. The root of the band portion (14) is formed to rise bifurcately from the base (12) along both sides of the buckle (15). The base (12) is formed with a side holder (27) extending from the root of the band portion so as to cross the buckle at right angles for holding a part of the sides of the electric cable or the like.

## Description

The present invention relates to a fastener for electric cable or wire for use to mount an elongated member such as an electric cable or a wire harness to a panel such as a vehicle body.

For mounting an elongated member such as an electric cable on a panel or the like, fasteners for electric cable are known which comprise a base, a panel attachment portion provided in the base, a band to hold the elongated member whose sides are wound thereby, and a buckle to keep the band in a bundle. With this fastener, the mounting operation is easily accomplished since the elongated member is fastened simply when the band is wound round it, inserted into the buckle and pulled out, and it is mounted on the panel just when the panel attachment portion is pressed in so that the base comes in surface-contact with the panel.

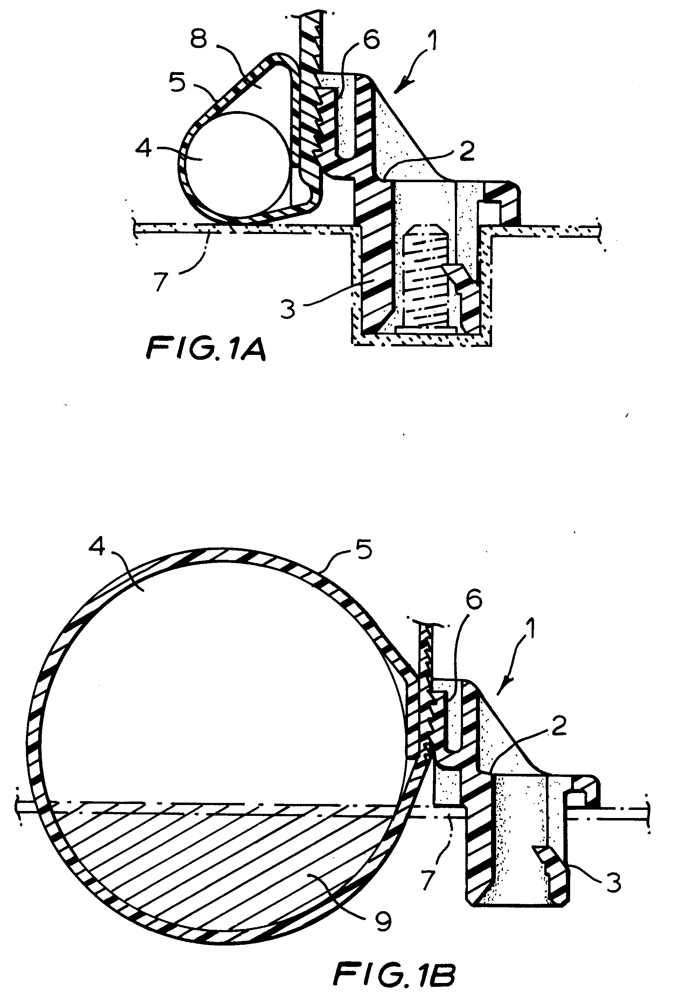

In the following, such a known fastener is described with reference to certain of the accompanying drawings. In Figure 1-A, a fastener (1) comprises a base (2), a panel attachment portion (3) provided in the base (2), a band (5) to hold an electric cable (4) whose sides are wound by it, and a buckle (6) formed to stand straight on the base (2) for keeping the band (5) in a bundle. To mount the electric cable (4) on a panel (7), the electric cable can be fastened simply by winding the band (5) round it and pulling the band inserted into the buckle (6). The fastener (1) can be attached to panel (7) just by pressing the panel attachment portion (6) in so that the base (2) comes in surface contact with the panel 7.

In the above-described known fastener if the electric cable (4) is thin, a space is formed between the root of the band (5) and the electric cable (4) and the space hinders reliable clamping. In the case where the electric cable (4) is thick as shown in Figure 1 (B), it interferes with the panel as indicated by an obliquely lined portion (9) to make it difficult to fix the electric cable (4) to the panel (7).

Accordingly, the present invention aims to provide a fastener for electric cable which is capable of mounting an electric cable on a panel reliably regardless of whether the electric cable is thin or thick.

According to the present invention, there is provided a fastener for mounting an elongated member like an electric cable on a panel such as a vehicle body, comprising a base, panel attachment portion provided in the base, a band portion to hold the elongated member whose sides are wound thereby, a buckle formed to stand straight on the base for keeping the band portion in a bundle, characterised in that the root of the band portion is formed to rise bifurcately along both sides of the buckle and the bifurcated portions joint to form a band after extending over a predetermined length, the base formed with a side holder extending so as to cross the buckle at right angles for holding a part of the sides of the elongated member.

In order that the invention can be better understood, two preferred embodiments will now be described in greater detail by way of example with reference to the accompanying drawings in which:-
Figures 1A and 1B are explanatory drawings of a conventional fastener for electric cable;
Figure 2 is a plan view of a first embodiment fastener according to the present invention;
Figure 3 is a front view of the fastener of Figure 2;
Figure 4 is a right side view of the fastener of Figure 2;
Figure 5 is a sectional view taken along the line A-A of Figure 2;
Figure 6 is a sectional view taken along the line B-B of Figure 2;
Figure 7 is a partial view taken from the direction C in Figure 3;
Figure 8A and 8B are explanatory drawings showing the first embodiment in use;
Figure 9 is a front view of a second embodiment fastener according to the present invention, and
Figure 10 is a right side view of the fastener of Figure 9.

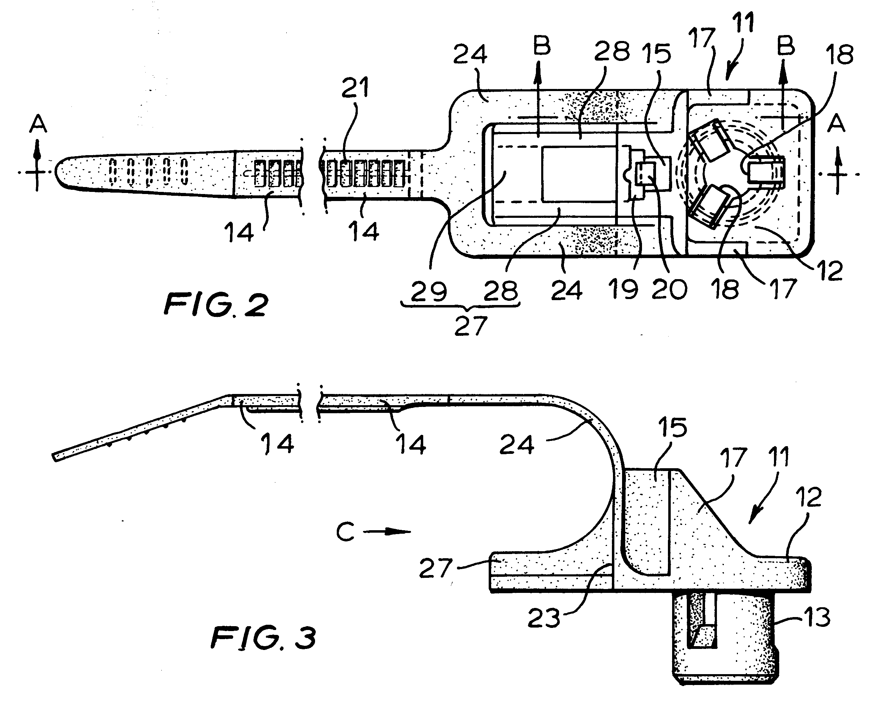

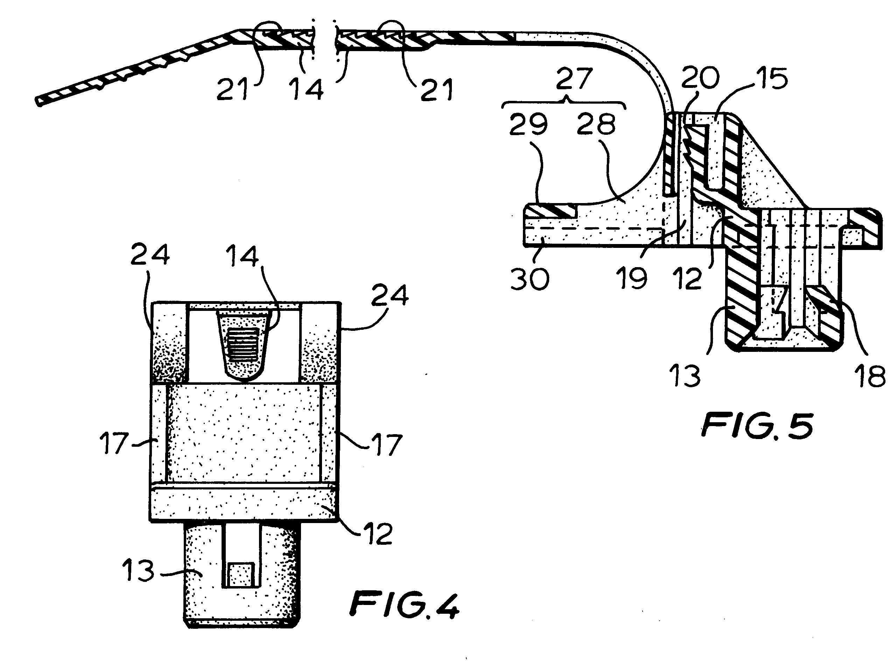

Referring to the accompanying drawings, Figures 2 through 7 show an embodiment fastener for electric cable according to the present invention. A fastener (11) comprises a base (12), a panel attachment portion (13) provided in the base, a band portion (14), and a buckle (15) and the base (12), a pair of triangular ribs (17) is provided to enhance the strengths of the buckle (15) and the base (12). The panel attachment portion (13) is hollowed to engage with a stud projected from a panel such as a vehicle body when the stud is pressed thereunto, and engagement pawls (18) to engage with threads of the stud are provided inside the panel attachment portion. In a hole into which the band portion (14) is inserted, the buckle (15) is provided with a non-return pawl (20) for resilient engagement. It engages with one of a plurality of engagement grooves (21) formed in the band portion (14) so as to keep the band portion (14) in a bundle. The non-return pawl (20) may be provided with an upwardly extending arm as a release member to disengage the band portion from the engagement groove (21).

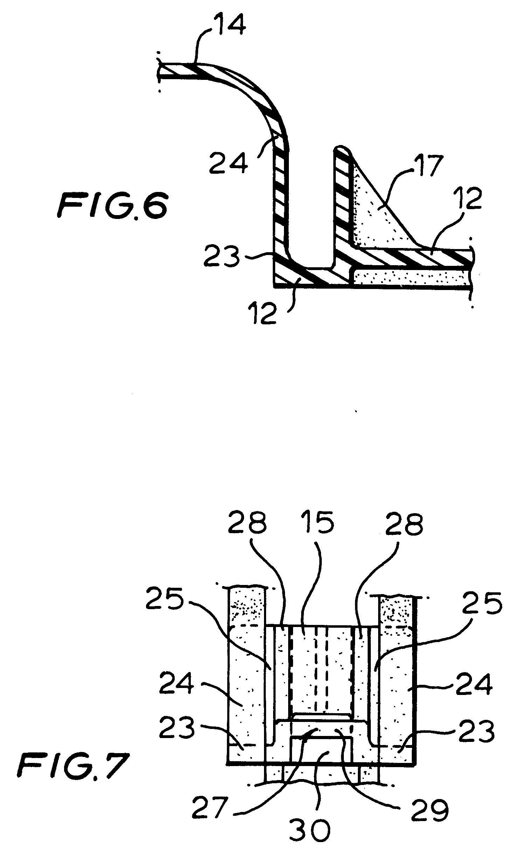

In accordance with the present invention, a root (23) of the band portion (14) is formed to rise from the base (12) bifurcately along both sides of the buckle (15). Bifurcate portions (24) of the band portion (14) rise from the root (23) along the buckle (15) and after extending over a predetermined length, they join into a band. As shown in Figure 7, the bifurcate portions (24) are completely separated from the buckle (15), with spaces (25) therebetween. The separation of root portions of the band portion (14) gives it a high flexibility and the bifurcation enables it to maintain the tensile strength at a high level despite the thinness of the portions. Moreover, the thinness helps to increase the flexibility even further.

The plate-like base (12) is formed with a side holder (27) extending in the direction in which it crosses the standing buckle (15) at right angles, i.e. horizontally, so as to hold a part of the sides of an elongated member such as an electric cable. In order to hold the elongated member such as an electric cable stable, the side holder (27) comprises a pair of curved ribs (28) and a coupling plate (29) on the advancing end side (as best shown in Figure 2). Particularly because the pair of curved ribs (28) is capable of being in contact with the electric cable or the like at two points longitudinally, their longitudinal movement is restricted so as to be fixed reliably. As shown in Figure 7, a space (30) through which the portion (14) passes is formed and the space guides the band portion (14) to prevent it from twisting.

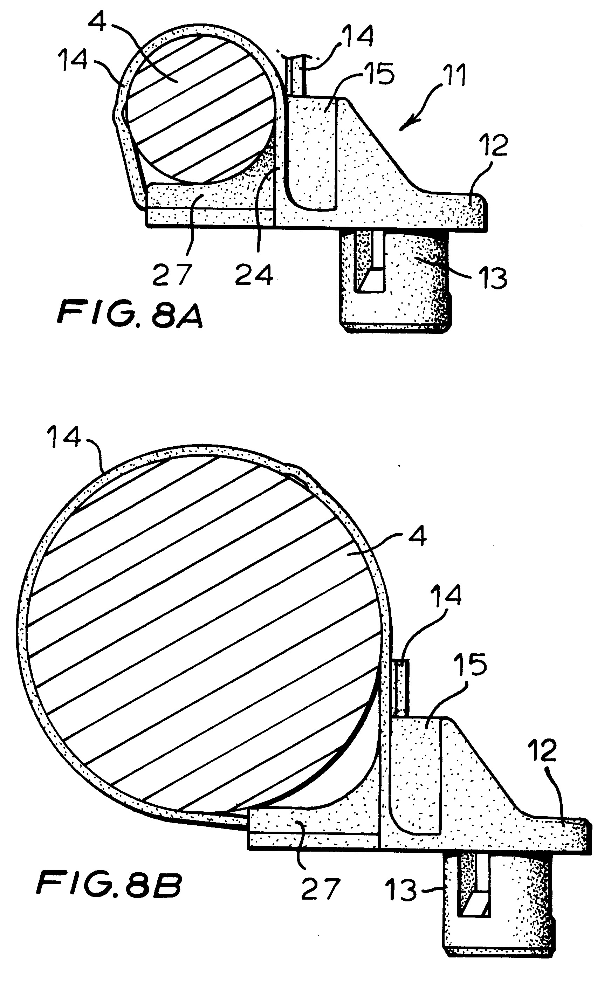

Fastening an electric cable (14) by the use of the fastener (11) of the above structure is now described with reference to Figures 8A and 8B. Referring to Figure 8A, the thin electric cable (4) is fastened when the band portion (14) is wound round the electric cable (4) and the end of the band portion is inserted into the buckle (15) and pulled. In this fastening, the bifurcate portions (24) bend along the sides of the thin electric cable (4) so as not to form the space (8) shown in Figure 1A. When, in the above state, the panel attachment portion (13) is pressed over a threaded stud (not illustrated) secured to another portion on the panel so as to bring the base (12) into surface contact with the panel, the fastener can be fixed right away. In the case where the electric cable (4) is thick as shown in Figure 8B, it can be fastened also when the band portion (14) is wound round the electric cable (4) and the end of the band portion inserted into the buckle (15) is pulled. In this fastening, as the side holder (27) works to lift the sides of the electric cable (4) and the interfering portion (9) in Figure 1B is got rid of, even a thick cable or the like can be fixed firmly.

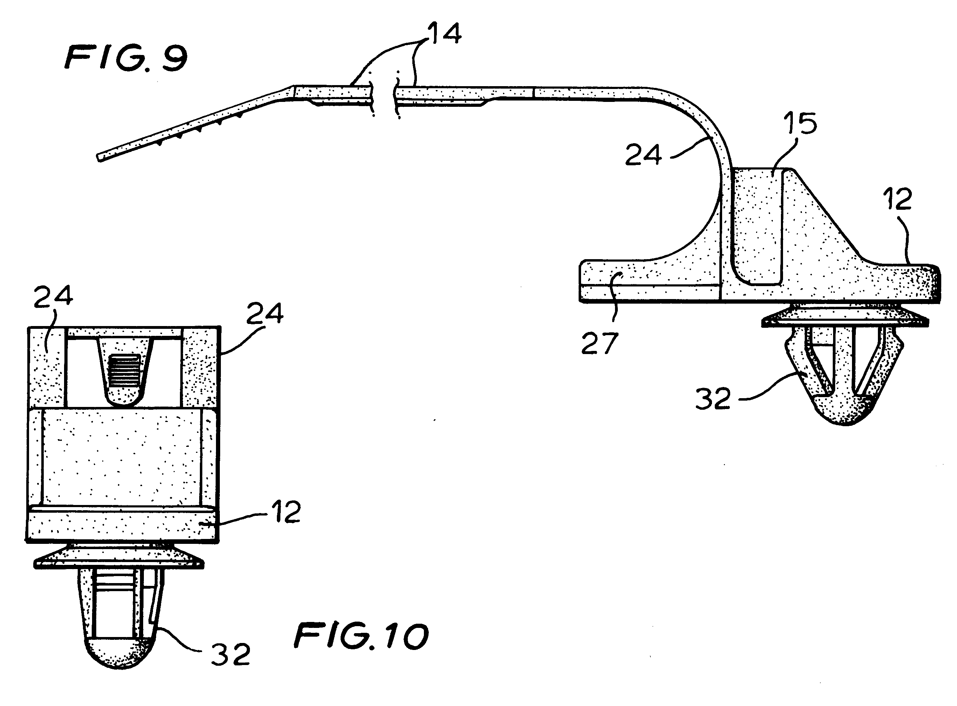

Figures 9 and 10 show a second embodiment fastener for electric cable according to the present invention. In this embodiment, the panel attachment portion (32) has such a configuration that it is inserted into a hole formed in a panel for engagement with it instead of engaging with a threaded stud. Since all the other elements are identical with those of the first embodiment shown in Figures 2 through 8, their description is not repeated here.

Since, in fasteners according to the present invention, the band portion is formed to rise from the base bifurcately along both sides of the buckle and the base is formed with a side holder extending from the root of the band portion so as to cross the buckle at right angles for holding the sides of the electric cable or the like, an elongated member such as an electric cable can be fastened reliably regardless of its thickness, or thinness, and the electric cable or the like is reliably fixed to the panel.

## Claims

1. A fastener for mounting an elongated member like an electric cable on a panel such as a vehicle body, comprising a base, panel attachment portion provided in said base, a band portion to hold the elongated member whose sides are wound thereby, and a buckle formed to stand straight on the base for keeping the band portion in a bundle, characterised in that the root of the band portion is formed to rise bifurcately along both sides of the buckle and the bifurcate portions join to form a band after extending over a predetermined length, the base formed with a side holder extending so as to cross the buckle at right angles for holding a part of the sides of the elongated member.
